# EUROPEAN PATENT SPECIFICATION

(11) **EP 4 286 133 B1**
(45) Date of publication and mention of the grant of the patent: **19.02.2025**
(21) Application number: 23175589.3
(22) Date of filing: 26.05.2023
(51) Int. Cl.: B29C 45/76, B29C 45/18

(54) **METHOD FOR MOLDING RESIN MATERIAL MIXED WITH PULVERIZED MATERIAL**
VERFAHREN ZUM FORMEN VON MIT PULVERISIERTEM MATERIAL VERMISCHTEM HARZMATERIAL
PROCÉDÉ DE MOULAGE DE MATÉRIAU DE RÉSINE MÉLANGÉ À UN MATÉRIAU PULVÉRISÉ

(30) Priority: 31.05.2022 JP 2022088260
(43) Date of publication of application: 06.12.2023
(73) Proprietor: Nissei Plastic Industrial Co., Ltd., Hanishina-gun, Nagano-ken 389-0693 (JP)
(72) Inventor: KOZUKA, Makoto, Sakaki-machi, 389-0693 (JP)
(74) Representative: Haseltine Lake Kempner LLP

(56) References cited:
- DE-A1- 102017 126 946
- JP-A- 2007 125 818
- JP-A- H04 163 013
- JP-A- H07 304 038
- US-A1- 2016 009 010

## Description

### Technical Field

The present invention relates to a method for molding a resin material mixed with a pulverized material, and the method includes plasticizing and injection-molding a resin material mixed with a pulverized material in which a virgin material and the pulverized material are mixed in a predetermined ratio.

### Background Art

In general, in production plants and the like which use injection molding machines, not only virgin material serving as resin material for molding, but also unneeded molded products such as sprues/runners and molding defects generated after molding, are often reused. In this case, these unneeded molded products are finely pulverized to produce a pulverized material, the pulverized material is mixed with the virgin material (pellets) in a predetermined ratio and thus the resulting mixture is used as a resin material mixed with a pulverized material.

Conventionally, as a molding means for utilizing the resin material mixed with the pulverized material as described above to perform molding, a plastic molding mechanism disclosed in Patent Literature 1 and a resin molding device having the function of reusing sprues/runners disclosed in Patent Literature 2 are known.

The plastic molding mechanism disclosed in Patent Literature 1 is intended to provide a plastic molding mechanism in which a roughly pulverized material is mixed with a raw material stably and efficiently and a collected molded product is reused. Specifically, the plastic molding mechanism includes: a conveying means for directly conveying the collected molded product removed from a molding mold to above the material drop opening of a removal device; a means of rough pulverization which is arranged on the upper surface of a raw material feeding rate adjusting means fixed to an upper portion of the material drop opening so as to roughly pulverize the collected molded product that is conveyed; and the raw material feeding rate adjusting means which includes a through-hole for dropping the collected molded product roughly pulverized by the means of rough pulverization to the material drop opening and conveys a raw material to the through-hole while the feeding rate thereof is being adjusted so as to mix the collected molded product and the raw material.

The resin molding device disclosed in Patent Literature 2 is intended to eliminate the need for additionally providing, in a molding machine, a large-scale device for transporting the pulverized material of sprues/runners to simplify the configuration of the entire resin molding device and to facilitate cleaning when types are changed. Specifically, the resin molding device includes: a removal means for removing the sprues/runners from the resin molding position of the molding machine; and a pulverizer for pulverizing the sprues/runners removed by the removal means, and in the pulverizer, a pulverized material outlet is connected to the molding machine such that the pulverized material obtained by pulverizing the sprues/runners supplied from the removal means is supplied into the molding machine.

### Summary of Invention

### Technical Problem

However, the conventional molding means which use the resin material mixed with the pulverized material described above have the following problems.

Specifically, in the pulverized material used, the shape and the size of individual particles are not uniform but random, and thus voids are easily generated in a molten resin within the screw of an injection molding machine at the time of plasticization. Consequently, insufficient melting of the resin and variations occur, and thus the molding quality is lowered and furthermore, an increase in the number of molding failures occurs, with the result that it is disadvantageously impossible to perform stable molding and production.

Even when the pulverized material is random, if its state can be grasped numerically to some extent, it is possible to take necessary countermeasures. However, an appropriate means for dealing with the necessary countermeasures does not exist, and even if the appropriate means is provided, steps such as a cumbersome and time-consuming measurement are added, and thus at an actual production site, for example, a significant delay in production occurs, with the result that this is not necessarily a realistic method.

An object of the present invention is to provide a method for molding a resin material mixed with a pulverized material which solves the problems in the background art as described above.

### Solution to Problem

In order to solve the problems described above, in the method for molding a resin material mixed with a pulverized material according to the present invention, when a resin material Q mixed with a pulverized material in which a virgin material Qp and a pulverized material Qc are mixed in a predetermined ratio is plasticized and injection-molded, the bulk densities of the virgin material Qp and the pulverized material Qc are previously measured, based on pulverized material bulk density data Dc related to the bulk density of the pulverized material Qc and virgin material bulk density data Dp related to the bulk density of the virgin material Qp obtained by the measurement, a conversion coefficient Kc for a predetermined molding condition when the virgin material Qp and the pulverized material Qc are mixed in the predetermined ratio is determined and registered. When the pulverized material Qc is used, at least the bulk density of the pulverized material Qc which is used is measured and based on the pulverized material bulk density data Dc, the virgin material bulk density data Dp obtained by the measurement, and the conversion coefficient Kc, processing for modifying the molding condition is performed.

In this case, in a preferred aspect of the present invention, as the bulk density, a loose bulk density is preferably used. On the other hand, the measurement of the bulk density can be performed by utilizing the function of a molding machine M. Specifically, the measurement of the bulk density can be performed by feeding the pulverized material Qc or the virgin material Qp into the hopper 2 of the molding machine M, closing a shutter 3 when the pulverized material Qc or the virgin material Qp is fed at least to a position of the hopper 2 above the shutter 3 and thereafter rotating a screw 4 to measure the weight of a resin Qpr, Qcr in a drooling state which is discharged from a nozzle 5. The total weight of the resin Qpr, Qcr in the drooling state can be used as the bulk density data Dp, Dc. The predetermined molding condition can include at least one or both of a plasticization time Tm and the amount of heat generation Hw. The conversion coefficient Kc can be corrected by one or two or more of the area of the pulverized material Qc, the dimension of the pulverized material Qc and the shape of the screw.

### Advantageous Effects of Invention

In the method for molding a resin material mixed with a pulverized material according to the present invention as described above, the following remarkable effects are achieved.
(1) The bulk densities of the virgin material Qp and the pulverized material Qc are measured, based on the pulverized material bulk density data Dc related to the bulk density of the pulverized material Qc and the virgin material bulk density data Dp related to the bulk density of the virgin material Qp obtained by the measurement, the conversion coefficient Kc for the predetermined molding condition when the virgin material Qp and the pulverized material Qc are mixed in the predetermined ratio is determined, at least the bulk density of the pulverized material Qc which is used is measured and based on the pulverized material bulk density data Dc, the virgin material bulk density data Dp obtained by the measurement, and the conversion coefficient Kc, the processing for modifying the molding condition is performed. Hence, even when the pulverized material Qc having random shapes and sizes of particles is mixed with the virgin material Qp to be used, it is possible to avoid insufficient melting of the resin and variations to stabilize the molten state of the resin. In this way, it is possible to enhance and uniformize the molding quality, to further reduce molding failures and to stabilize production without the occurrence of a production delay. Moreover, for example, even a user who does not have specialized knowledge can easily perform this method.
(2) In a preferred aspect, as the bulk density, the loose bulk density is used, and thus it is possible to measure a more preferable bulk density in a state where useless external pressure and the like are not applied to the virgin material Qp and the pulverized material Qc. Hence, the molten state of the resin can be grasped more accurately, and consequently, the pulverized material bulk density data Dc, the virgin material bulk density data Dp and the conversion coefficient Kc which are more accurate can be obtained, and more appropriate modification processing can be performed.
(3) In a preferred aspect, when the measurement of the bulk density is performed, the function of the molding machine M is utilized to perform the measurement, and thus it is not necessary to additionally prepare a large-scale measurement device and the like, with the result that the method can be performed at low cost even at a small-scale production plant.
(4) In a preferred aspect, when in the measurement of the bulk density, the pulverized material Qc or the virgin material Qp is fed into the hopper 2 of the molding machine M, the shutter 3 is closed when the pulverized material Qc or the virgin material Qp is fed at least to a position of the hopper 2 above the shutter 3 and thereafter the screw 4 is rotated to measure the weight of the resin Qpr, Qcr in the drooling state which is discharged from the nozzle 5, the injection molding machine M which is actually used in the production and is owned by a user can be directly utilized, with the result that the user can make the measurement more easily and rapidly by the operation of the injection molding machine M itself.
(5) In a preferred aspect, when the total weight of the resin Qpr, Qcr in the drooling state is used as the bulk density data Dp, Dc, the result of the measurement of the weight of the resin Qpr, Qcr in the drooling state can be regarded as the bulk density to be utilized without being processed, with the result that at a production site, the user can easily measure the intended bulk density (apparent bulk density).
(6) In a preferred aspect, the predetermined molding condition includes at least one or both of the plasticization time Tm and the amount of heat generation Hw, and thus the plasticization time Tm and the amount of heat generation Hw which are more likely to be significantly affected by the pulverized material Qc having random shapes and sizes of particles can be modified, with the result that it is possible to easily optimize these molding conditions or molding conditions related thereto.
(7) In a preferred aspect, when the conversion coefficient Kc is corrected by one or two or more of the area of the pulverized material Qc, the dimension of the pulverized material Qc and the shape of the screw, the conversion coefficient Kc can be finely adjusted by physical elements which are easily affected, with the result that it is possible to further optimize the molding conditions or molding conditions related thereto in terms of fine adjustment.

### Brief Description of Drawings

Fig. 1 is a flowchart showing a processing procedure of a method for molding a resin material mixed with a pulverized material according to a preferred embodiment of the present invention;
Fig. 2 is a configuration diagram showing the mechanical structure of an injection molding machine which can perform the molding method described above;
Fig. 3 is a block diagram showing a processing system (control system) in the injection molding machine which can perform the molding method;
Fig. 4 is a setting screen diagram in a display included in the injection molding machine which can perform the molding method;
Fig. 5 is an illustrative diagram of a pulverized material and a virgin material used in the molding method;
Fig. 6 is a correlation characteristic chart of the amount of drooling and a loose bulk density in the pulverized material and the virgin material used in the molding method;
Fig. 7 is a step illustrative diagram in the molding method;
Fig. 8 is another step illustrative diagram in the molding method;
Fig. 9 is a diagram showing a relationship between the actual measured value and the calculated value of a plasticization time with consideration given to a bulk density which can be utilized in the molding method; and
Fig. 10 is a diagram showing a relationship between the actual measured value and the calculated value of the amount of heat generation with consideration given to the bulk density which can be utilized in the molding method.

### Description of Embodiments

A preferred embodiment according to the present invention will then be described in detail with reference to drawings.

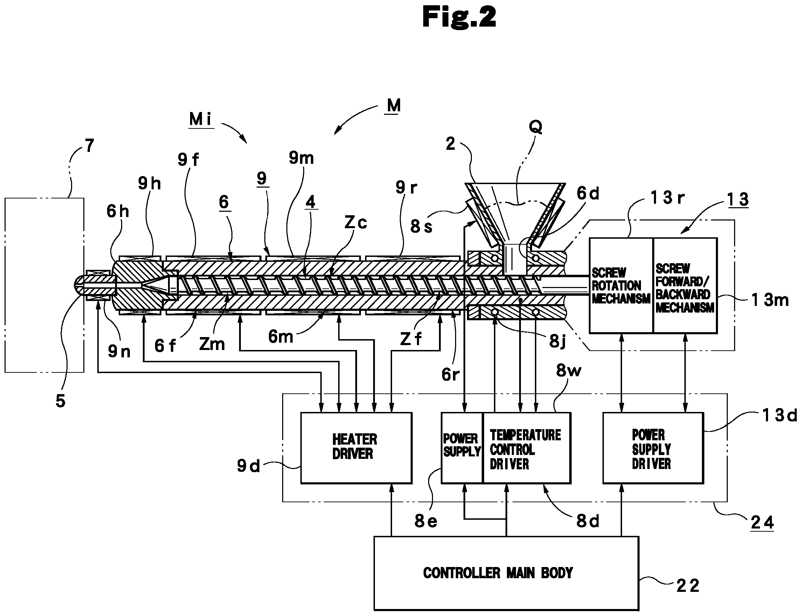

In order to facilitate the understanding of a method for molding a resin material mixed with a pulverized material according to the present embodiment, an outline of an injection molding machine M which can utilize the molding method will first be described with reference to Figs. 2 to 7.

Fig. 2 shows the injection molding machine M, and in particular an injection device Mi in which a mold clamping device is omitted. In the injection device Mi, reference sign 6 represents a heating tube, and the heating tube 6 includes a nozzle 5 at a front end portion via a head portion 6h. The nozzle 5 has the function of injecting a molten resin within the heating tube 6 to a mold 7 indicated by virtual lines.

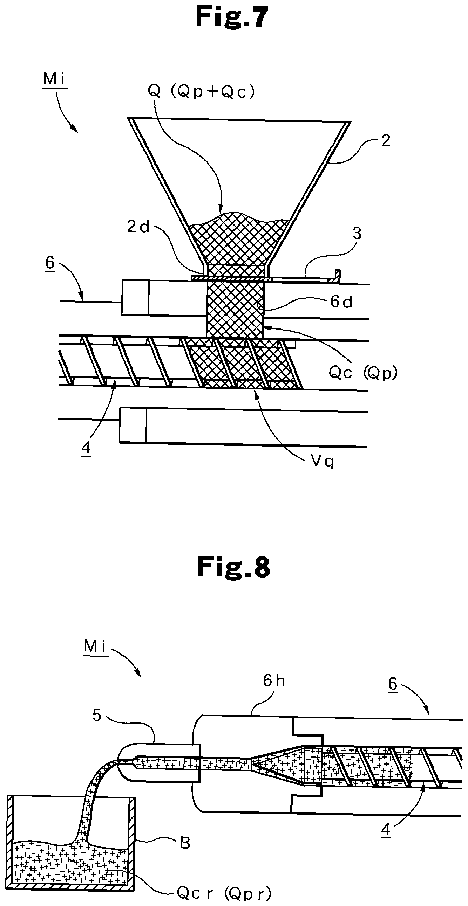

On the other hand, a hopper 2 is provided above around a back end of the heating tube 6. As shown in Fig. 7, a lower end opening 2d of the hopper 2 communicates with the interior of the heating tube 6 through a material drop opening 6d which is formed to penetrate to the heating tube 6. In this way, the resin material Q mixed with the pulverized material within the hopper 2 is supplied through the material drop opening 6d into the heating tube 6. In the lower end opening 2d, a shutter 3 which opens and closes the lower end opening 2d is further provided. The shutter 3 is displaced to a position on a right side (back side of the injection molding machine M) shown in Fig. 7 so as to enter a fully closed position in which the lower end opening 2d is blocked whereas the shutter 3 is displaced to a position on a left side (front side of the injection molding machine M) so as to enter a fully opened position in which the lower end opening 2d is opened.

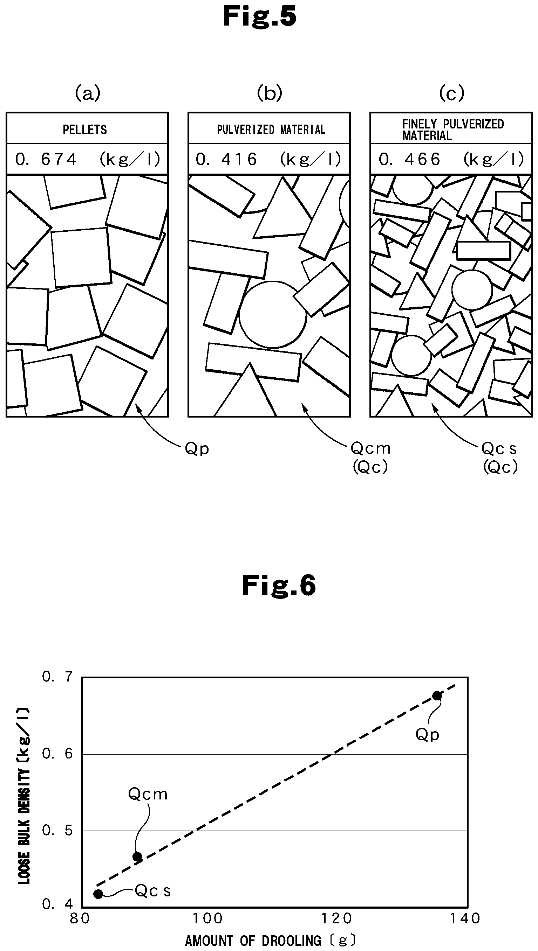

The resin material Q mixed with the pulverized material is a resin material in which a virgin material Qp and the pulverized material Qc are mixed in a predetermined ratio, and Fig. 5 shows a specific image of the virgin material Qp and the pulverized material Qc (Qcm, Qcs). Fig. 5(a) shows pellets of the virgin material Qp. The pellets have a substantially constant particle shape, and a loose bulk density is 0.674 [kg/liter]. Fig. 5(b) shows the pulverized material Qc (Qcm) of a standard size obtained by pulverizing sprues/runners and the like. The pulverized material has random particle shapes, and a loose bulk density is 0.416 [kg/liter]. Fig. 5(c) shows the pulverized material (finely pulverized material) Qc (Qcs) in which the material is finely pulverized, and a loose bulk density is 0.466 [kg/liter].

In Fig. 2, reference sign 8s represents a heater which is provided on the outer circumferential surface of the hopper 2 to heat the resin material Q stored within the hopper 2, and reference sign 8j represents a water jacket which is formed around the material drop opening 6d in the heating tube 6. The heater 8s is connected to a power supply circuit 8e in a temperature control driver 8d, and the water jacket 8j is connected to a temperature-controlled water circulation circuit 8w in the temperature control driver 8d. The temperature-controlled water circulation circuit 8w circulates a temperature-controlled water medium (hot water or cooling water) to the water jacket 8j, and thereby can control the temperature of (heating or cooling) the resin material Q which passes through the material drop opening 6d. Furthermore, the power supply circuit 8e and the temperature-controlled water circulation circuit 8w are connected respectively to a controller main body 22. In this way, control commands for the power supply circuit 8e and the temperature-controlled water circulation circuit 8w are fed from the controller main body 22 to the temperature control driver 8d.

A screw 4 is loaded inside the heating tube 6 so as to be rotatable and movable forward and backward. The surface of the screw is coated with a predetermined surface material (metal) with consideration given to durability and the like. The screw 4 has a metering zone Zm, a compression zone Zc and a feed zone Zf from the front side to the back side. On the other hand, a back end portion of the screw 4 is coupled to a screw driving portion 13. The screw driving portion 13 includes a screw rotation mechanism 13r which rotates the screw 4 and a screw forward/backward mechanism 13m which moves the screw 4 forward and backward. Although in an example shown in the figure, as the driving method of the screw rotation mechanism 13r and the screw forward/backward mechanism 13m, an electrical method using an electric motor is shown, a hydraulic method using a hydraulic circuit may be used, and the driving method is not limited. The screw rotation mechanism 13r and the screw forward/backward mechanism 13m are connected to a power supply driver 13d, and the power supply driver 13d is connected to the controller main body 22. In this way, control commands for the screw rotation mechanism 13r and the screw forward/backward mechanism 13m are fed from the controller main body 22 to the power supply driver 13d. Physical quantities such as the speed and the position of the screw 4 are detected by a speed sensor, a position sensor and the like which are not shown in the figure, and the detection signals thereof are fed to the power supply driver 13d.

The heating tube 6 further includes, from the front side to the back side, a heating tube front portion 6f, a heating tube center portion 6m and a heating tube back portion 6r, and on the outer circumferential surfaces of the heating tube front portion 6f, the heating tube center portion 6m and the heating tube back portion 6r, a front portion heating portion 9f, a center portion heating portion 9m and a back portion heating portion 9r are respectively provided. Likewise, on the outer circumferential surface of the head portion 6h, a head heating portion 9h is provided, and on the outer circumferential surface of a nozzle 6n, a nozzle heating portion 9n is provided. Each of the heating portions 9f, 9m, 9r, 9h and 9n can be formed with a hand heater or the like. Hence, the nozzle heating portion 9n, the head heating portion 9h, the front portion heating portion 9f, the center portion heating portion 9m and the back portion heating portion 9r constitute a heating group portion 9. The heating group portion 9 is connected to a heater driver 9d, and the heater driver 9d is connected to the controller main body 22. In this way, control commands for the heating portions 9f, 9m, 9r, 9h and 9n are fed from the controller main body 22 to the heater driver 9d, and heating temperatures are detected with temperature sensors (such as thermocouples) which are not shown in the figure, and the detection signals thereof are fed to the heater driver 9d.

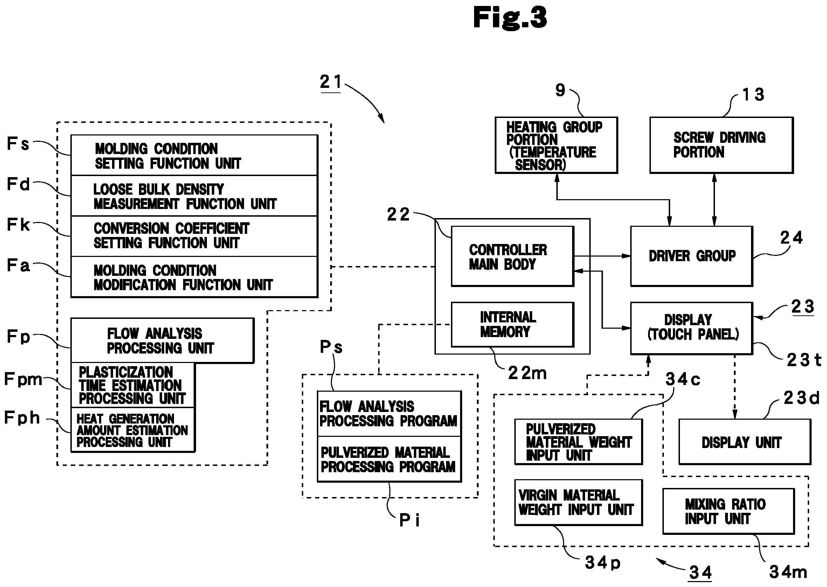

On the other hand, Fig. 3 shows a molding machine controller 21 which comprehensively controls the injection molding machine M. The molding machine controller 21 includes the controller main body 22 which has the function of a computer incorporating hardware such as a CPU and an internal memory 22m, and a display 23 is connected to the controller main body 22. The display 23 includes a display unit 23d which produces a necessary information display and also includes a touch panel 23t, and various types of input operations such as inputs, settings and selections can be performed with the touch panel 23t. A driver group 24 which drives (operates) various types of actuators is connected to the controller main body 22. The driver group 24 includes the temperature control driver 8d including the power supply circuit 8e and the temperature-controlled water circulation circuit 8w shown in Fig. 2, the power supply driver 13d and the heater driver 9d.

Hence, the molding machine controller 21 contains an HMI control system and a PLC control system, and a PLC program and an HMI program are stored in the internal memory 22m. By the PLC program, sequence operations in various types of steps in the injection molding machine M, the monitoring of the injection molding machine M and the like are executed, and by the HMI program, the setting and display of operation parameters for the injection molding machine M, the display of operation monitoring data for the injection molding machine M and the like are executed.

In the internal memory 22m added to the controller main body 22, application programs which realize the molding method according to the present embodiment of the present invention, that is, a flow analysis processing program Ps and a pulverized material processing program Pi are stored. In this way, the molding machine controller 21 realizes a molding condition setting function unit Fs, a loose bulk density measurement function unit Fd, a conversion coefficient setting function unit Fk and a molding condition modification function unit Fa serving as main function units related to the molding method. Furthermore, a flow analysis processing unit Fp is provided in association with the flow analysis processing program Ps, and a plasticization time prediction processing unit Fpm and a heat generation amount prediction processing unit Fph are provided in association with the flow analysis processing unit Fp.

The flow analysis processing unit Fp can utilize molding support devices for injection molding machines which have already been proposed by the present applicant (see Japanese Unexamined Patent Application Publication Nos. 2020-1183 and 2021-121959). Specifically, accurate information (data) on the molten state of a resin material can be numerically estimated by an estimation processing function.

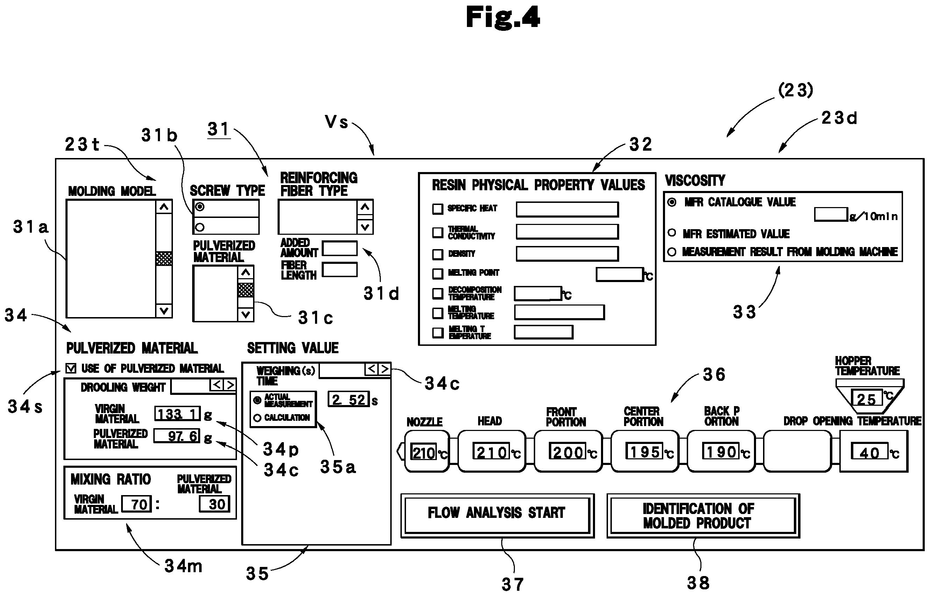

Furthermore, Fig. 4 shows a setting screen Vs which is displayed on the display 23. In Fig. 4, on the setting screen Vs, a molding machine and resin setting column 31 is arranged in an upper left portion, a resin physical property value setting column 32 is arranged in an upper center portion, a viscosity setting column 33 is arranged in an upper right portion, a pulverized material setting column 34 and a setting value input unit 35 are arranged in a lower left portion and a temperature setting column 36 is arranged from a lower center portion to a lower right portion. Moreover, a "flow analysis start" key 37 and a "molded product identification" key 38 are arranged below the temperature setting column 36. In this case, in the molding machine and resin setting column 31, a molding model setting unit 31a, a screw type setting unit 31b, a resin type setting unit 31c and a reinforcing fiber type setting unit 31d are provided, and in the resin physical property value setting column 32, input units for various types of detailed physical property values such as a specific heat, a thermal conductivity, a density, a melting point, a decomposition temperature, a melting temperature and a water absorption rate are provided. In the pulverized material setting column 34, a selection unit 34s for the use of the pulverized material which selects whether or not the pulverized material is used and a virgin material weight input unit 34p and a pulverized material weight input unit 34c for inputting a drooling weight which will be described later are provided, a mixing ratio input unit 34m for inputting a mixing ratio of the virgin material Qp and the pulverized material Qc is provided and furthermore, the setting value input unit 35 includes at least a weighing time input unit 35a.

An outline of the molding method according to the present embodiment which can be performed by the utilization of the injection molding machine M as described above will then be described with reference to Figs. 5 to 10.

In general, in the pulverized material Qc used in the resin material Q mixed with the pulverized material, as shown in Figs. 5(b) and 5(c), the shapes and sizes of individual particles are random, and thus voids are easily generated in the molten resin within the screw 4 of the injection molding machine M at the time of plasticization. Consequently, insufficient melting of the resin and variations occur, and thus the molding quality is lowered and furthermore, an increase in the number of molding failures occurs, with the result that it is disadvantageously impossible to perform stable molding and production.

Hence, in the molding method according to the present embodiment, at the site of a molding plant or the like, the user can easily and accurately grasp the degree of the bulk density (loose bulk density) of the pulverized material Qc, and it is possible to directly reflect it on the molding condition at the time of production. Specifically, the injection molding machine M provided in the molding plant or the like is utilized, and thus the loose bulk density of the pulverized material Qc used can be measured easily and rapidly, and the result of the measurement is used to be able to directly modify the molding condition at the time of production.

As described above, when the loose bulk density is measured, the function of the molding machine M is directly utilized to make the measurement, and thus it is not necessary to additionally prepare a large-scale measurement device and the like, with the result that the method can be performed at low cost even at a small-scale production plant. As the bulk density, the loose bulk density is used, and thus it is possible to measure a more preferable bulk density in a natural state where useless external pressure, vibration and the like are not applied to the virgin material Qp and the pulverized material Qc. Hence, the molten state of the resin can be grasped more accurately, and consequently, the pulverized material bulk density data Dc, the virgin material bulk density data Dp and the conversion coefficient Kc which are more accurate can be obtained, and more appropriate modification processing can be performed.

The measurement of the loose bulk density by directly utilizing the injection molding machine M can be performed as shown in Figs. 7 and 8.

The shutter 3 of the injection molding machine M is first switched to the fully opened position, and the pulverized material Qc to be measured is fed into the hopper 2. Since the pulverized material Qc is fed to be gradually accumulated, when the upper surface of the pulverized material Qc reaches at least a position of the hopper 2 above the shutter 3, the shutter 3 is displaced to the right side, with the result that the shutter 3 is switched to the fully closed position shown in Fig. 7. In this way, a constant volume Vq of the pulverized material Qc is filled from the lower surface of the shutter 3 into the material drop opening 6d and further from the lower end opening of the material drop opening 6d in a certain range of the screw 4 located below.

Thereafter, when the screw 4 is rotated, the pulverized material Qc is fed forward and is plasticized by the heating tube 6 heated with the heating group portion 9 including the heating portion 9r and the like, and the pulverized material Qc is brought into the drooling state as shown in Fig. 8 and is discharged from the nozzle 5. The resin Qcr in the drooling state discharged from the nozzle 5 is received by a container B which is set, and when all the resin Qcr is discharged, the total weight of the resin Qcr (= the amount of drooling [g]) is measured. The amount of drooling [g] measured can be used as the pulverized material **bulk** density data Dc.

Although the measurement of the pulverized material Qc has been described, the virgin material Qp can likewise be measured. Since the shape and the size of the virgin material Qp are constant, the virgin material Qp is measured only once, and the result thereof is registered as data, with the result that unless otherwise changed, the data can be read to be used for the subsequent measurements.

As described above, when in the measurement of the **bulk** density, the pulverized material Qc or the virgin material Qp is fed into the hopper 2 of the molding machine M and is fed at least to a position of the hopper 2 above the shutter 3, then the shutter 3 is closed, thereafter the screw 4 is rotated to measure the weight of the resin Qpr, Qcr in the drooling state discharged from the nozzle 5 and thus the injection molding machine M owned and actually used by the user can be directly utilized, with the result that the user can make the measurement more easily and rapidly by the operation of the injection molding machine M itself. When the total weight of the resin Qpr, Qcr in the drooling state is used as the virgin material bulk density data Dp and the pulverized material bulk density data Dc, the result of the measurement of the weight of the resin Qpr, Qcr in the drooling state can be regarded as the bulk density to be utilized without being processed, with the result that at the production site, the user can easily measure the intended bulk density (apparent bulk density).

Fig. 6 shows a relationship between the amounts of drooling [g] of the pulverized materials Qcm, Qcs and the virgin material (pellets) Qp shown in Figs. 5(a) to 5(c) and the loose bulk density [kg/liter]. As shown in Fig. 6, it can be confirmed that there is a sufficient correlation between the amounts of drooling obtained by the measurement and the loose bulk density.

Hence, in the present embodiment, as a relatively simple method, the conversion coefficient Kc is set, a predetermined molding condition (setting value) is multiplied by the conversion coefficient Kc and thus it is possible to easily modify the predetermined molding condition. The molding condition is a concept which includes not only a setting condition value set before molding but also, for example, a monitor value for grasping whether or not the state of molding after molding is satisfactory.

When the loose bulk density (amount of drooling) of the virgin material Qp and the loose bulk density (amount of drooling) of the pulverized material Qc are known, a plasticization time Tm which is an example of the molding condition can be determined by using, as the conversion coefficient Kc, "Kc = (bulk density of virgin material Qp) / (bulk density of pulverized material Qc)". In this way, when the mixing ratio of the pulverized material Qc to the virgin material Qp is clarified, by the degree of the mixing ratio, it is possible to modify the loose bulk densities (amounts of drooling [g]) of the virgin material Qp and the pulverized material Qc determined with the injection molding machine M described above, that is, the plasticization time Tm based on the conversion coefficient Kc.

Specifically, since the plasticization time Tm only for the virgin material Qp can be determined by the flow analysis processing unit Fp described above, the loose bulk density (amount of drooling) of the virgin material Qp and the loose bulk density (amount of drooling) of the pulverized material Qc are measured, and thus the conversion coefficient Kc is determined, and based on the mixing ratio of the virgin material Qp and the pulverized material Qc, it is possible to predict a plasticization time Tms when the pulverized material Qc is mixed to be used. In other words, the plasticization time Tms serving as a predicted value can be obtained by "Tms = Tm × Kc".

Since the conversion coefficient Kc is changed by the area (surface area) of the pulverized material Qc, the dimension, the shape of the screw and the like, the conversion coefficient Kc is corrected by these forms, the amount of correction is adjusted as necessary by an experiment or the like and the optimized conversion coefficient Kc is registered. As described above, the conversion coefficient Kc is corrected by one or two or more of the area of the pulverized material Qc, the dimension of the pulverized material Qc and the shape of the screw, and thus the conversion coefficient Kc can be finely adjusted by physical elements which are easily affected, with the result that it is possible to further optimize the molding conditions or molding conditions related thereto in terms of fine adjustment.

Although the plasticization time Tm is described as an example of the predetermined molding condition, other molding conditions such as the amount of heat generation Hw which is more likely to be significantly affected by the loose bulk density of the pulverized material Qc can likewise be modified. As described above, the predetermined molding condition includes at least one or both of the plasticization time Tm and the amount of heat generation Hw, and thus the plasticization time Tm and the amount of heat generation Hw which are more likely to be significantly affected by the pulverized material Qc having random shapes and sizes of particles can be modified, with the result that it is possible to easily optimize these molding conditions or molding conditions related thereto.

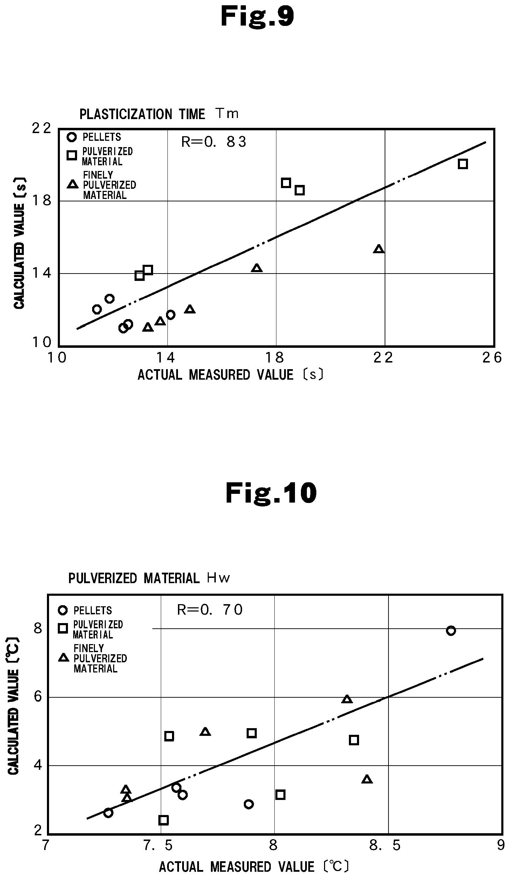

Figs. 9 and 10 show the results of the modification of the plasticization time Tm and the amount of heat generation Hw which are calculated by the conversion coefficient Kc described above when the screws 4 of five different types of shapes are used. Specifically, Fig. 9 shows a relationship diagram between the calculated value [s] of the plasticization time Tm calculated by the conversion coefficient Kc and the actual measured value [s] of the actual plasticization time Tm, and Fig. 10 shows a relationship diagram between the calculated value [°C] of the amount of heat generation Hw calculated by the conversion coefficient Kc and the actual measured value [s] of the actual amount of heat generation Hw. The calculated values are values which are modified with consideration given to the bulk density. The correlation coefficient of the plasticization time Tm shown in Fig. 9 is "0.83", and the correlation coefficient of the amount of heat generation Hw shown in Fig. 10 is "0.70".

As described above, a so-called predicted value obtained by modifying the molding condition for the virgin material Qp by the conversion coefficient Kc with consideration given to the bulk density (loose bulk density) can be predicted as a value close to the actual measured value, and can be practically utilized at the production site. For the amount of heat generation Hw described above, a measurement device which measures the temperature of the resin discharged to the mold 7 is used, and a difference between the maximum resin temperature at the time of discharge and a setting temperature is assumed to be the amount of heat generation.

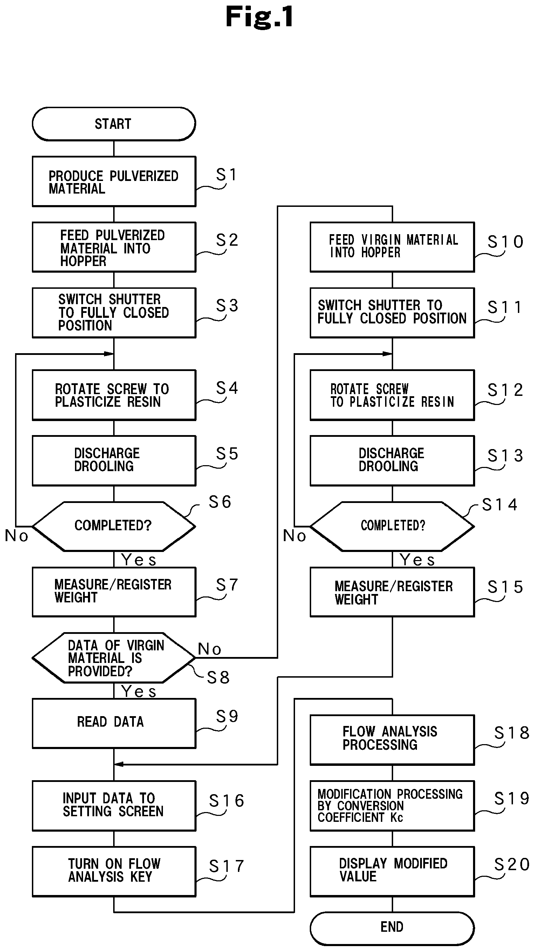

The method for molding a resin material mixed with a pulverized material according to the present embodiment will then be described with reference to drawings according to a flowchart shown in Fig. 1.

Unneeded molded products such as sprues/runners and molding defects generated after production (molding) are first pulverized by the utilization of an unillustrated pulverizer or the like, and thus the pulverized material Qc which is mixed with the virgin material Qp to be used is produced (step S1). The pulverized material Qc produced is shown in Figs. 5(b) and 5(c). Fig. 5(b) shows the standard pulverized material Qc (Qcm), and Fig. 5(c) shows the pulverized material (finely pulverized material) Qc (Qcs) in which the material is finely pulverized as compared with the standard pulverized material Qcm.

Then, as shown in Fig. 7, the pulverized material Qc produced is fed into the hopper 2 in which the shutter 3 is in the fully opened position (step S2). In this way, the pulverized material Qc is accumulated in a certain range of the screw 4 located below the material drop opening 6d and furthermore, the lower end opening. Thereafter, when the pulverized material Qc is gradually accumulated, and the upper surface of the pulverized material Qc reaches at least a position above the shutter 3, the shutter 3 is switched to the fully closed position (step S3). This state is the state of Fig. 7. In this way, a constant volume Vq of the pulverized material Qc is calculated.

Then, the screw 4 is rotated, and thus the pulverized material Qc is fed forward. In this way, as shown in Fig. 8, the pulverized material Qc is fed forward and is plasticized by the heating tube 6 heated with the heating group portion 9 including the heating portion 9r and the like (step S4). Then, the molten resin Qcr which is plasticized is brought into the drooling state and is discharged from the tip end of the nozzle 5 to the outside (step S5).

This discharge step is continued until all the molten resin Qcr is discharged from the tip end of the nozzle 5 (step S6). On the other hand, the molten resin Qcr which is discharged is received by the container B which is set, and when the discharge is completed, the weight [g] related to the amount of drooling is measured. The container B may also serve as, for example, a weight scale. Then, the amount of drooling which is measured is registered as the pulverized material bulk density data Dc (step S7).

Then, the amount of drooling (bulk density) related to the virgin material Qp is acquired (step S8). In this case, when data related to the amount of drooling (bulk density) in the virgin material Qp has already been registered, the data is read (step S9). On the other hand, when the data has not been registered, a measurement can be made as with the measurement of the pulverized material Qc described above. Specifically, the virgin material (pellets) Qp is fed into the hopper 2 in which the shutter 3 is in the fully opened position, and when the upper surface of the virgin material Qp fed reaches at least a position above the shutter 3, the shutter 3 is switched to the fully closed position (steps S10 and S11). Thereafter, the screw 4 is rotated, and thus the virgin material Qp is fed forward and is plasticized by the heating tube 6, and the molten resin Qcr in the drooling state which is plasticized is discharged from the nozzle 5 (steps S12 and S13). Then, when all the molten resin Qcr is discharged, the weight [g] related to the amount of drooling is measured, and the amount of drooling measured is registered as the virgin material bulk density data Dp (steps S14 and S15). A part or all of the measurement step in steps S2 to S15 can be automatically processed by the utilization of the pulverized material processing program Pi described previously with the loose bulk density measurement function unit Fd.

Since in the measurement step described above, the bulk densities (amounts of drooling) of the virgin material Qp and the pulverized material Qc are obtained, data input is performed in the pulverized material setting column 34 on the setting screen Vs shown in Fig. 4 (step S16). Specifically, the use of the pulverized material in the selection unit 34c for the use of the pulverized material is checked, the drooling weight [g] (an example of which is "133.1") of the virgin material Qp is input to the virgin material weight input unit 34p and the drooling weight [g] (an example of which is "92.6") of the virgin material Qc is input to the pulverized material weight input unit 34c. In this case, the data Dp and Dc registered may be reflected (transferred) onto the setting screen Vs without being processed. Furthermore, the mixing ratio (weight ratio) of the virgin material Qp and the pulverized material Qc is input to the mixing ratio input unit 34m. Specifically, the mixed amount [%] (an example of which is "70") of virgin material Qp and the mixed amount [%] (an example of which is "30") of pulverized material Qc are input.

When the data input is completed, the flow analysis start key 36 is turned on (step S17). In this way, the flow analysis processing program Ps is started up, and the flow analysis processing is performed by the flow analysis processing unit Fp (step S18). In the flow analysis processing, as described previously, the molding support devices for injection molding machines which have already been proposed by the present applicant (see Japanese Unexamined Patent Application Publication Nos. 2020-1183 and 2021-121959) can be utilized. Specifically, accurate information (data) on the molten state of the resin material can be numerically estimated by the estimation processing function, and it is possible to obtain an estimated solid phase rate, an estimated resin decomposition rate and an estimated breakage rate of a reinforcing fiber and further obtain the plasticization time Tm and the amount of heat generation Hw based on these rates.

Basically, in the flow analysis processing, by at least the molding condition for the virgin material Qp and in particular, in the illustrated case, by the main function of the molding method according to the present embodiment for the purpose of obtaining the plasticization time and the amount of heat generation, modification processing in a case where the pulverized material Qc is mixed to be used is performed (step S19). In other words, the modification processing is calculated using the molding condition modification function unit Fa described previously. Specifically, the plasticization time prediction processing unit Fpm multiplies the plasticization time Tm by the conversion coefficient Kc to determine a modified value, and the heat generation amount prediction processing unit Fph multiplies the amount of heat generation Hw by the conversion coefficient Kc to determine a modified value. Each of the conversion coefficient Kc for the plasticization time Tm and the conversion coefficient Kc for the amount of heat generation Hw is individually set. Then, the plasticization time Tms after being modified and the like are reflected (updated) on the display of the setting screen Vq (step S20).

In this way, even when the pulverized material Qc in which the bulk density (loose bulk density) is not found is mixed with the virgin material Qp and is used as the resin material Q mixed with the pulverized material, by the estimation of its molten state, it is possible to accurately grasp the molten state, and by modifying the necessary molding condition, it is possible to optimize it.

As described above, in the method for molding a resin material mixed with a pulverized material according to the present invention, as a basic method, the bulk densities of the virgin material Qp and the pulverized material Qc are previously measured, based on the pulverized material bulk density data Dc related to the bulk density of the pulverized material Qc and the virgin material bulk density data Dp related to the bulk density of the virgin material Qp obtained by the measurement, the conversion coefficient Kc for the predetermined molding condition when the virgin material Qp and the pulverized material Qc are mixed in the predetermined ratio is determined and registered, when the pulverized material Qc is used, at least the bulk density of the pulverized material Qc which is used is measured and based on the pulverized material bulk density data Dc, the virgin material bulk density data Dp obtained by the measurement, and the conversion coefficient Kc, the processing for modifying the molding condition is performed. Hence, even when the pulverized material Qc having random shapes and sizes of particles is mixed with the virgin material Qp to be used, it is possible to avoid insufficient melting of the resin and variations to stabilize the molten state of the resin. In this way, it is possible to enhance and uniformize the molding quality, to further reduce molding failures and to stabilize production without the occurrence of a production delay. Moreover, for example, even a user who does not have specialized knowledge can easily perform this method.

For example, the resin material Q mixed with the pulverized material in which the virgin material Qp and the pulverized material Qc are mixed in the predetermined ratio does not mean that only the virgin material Qp and the pulverized material Qc are mixed, it is sufficient to include the virgin material Qp and the pulverized material Qc and another material may be included in addition to the virgin material Qp and the pulverized material Qc. In this case, the predetermined ratio includes a case where the virgin material Qp is "0". On the other hand, the conversion coefficient Kc may be a coefficient of a simple value or may be a coefficient including a variable and a formula. Furthermore, although as the bulk density, the loose bulk density is preferably used, a bulk density under a certain condition, for example, in which a predetermined pressure is applied to compress the volume may be used. On the other hand, although it is preferable to utilize the function of the molding machine M to measure the bulk density, another measurement device having a similar function may be used to measure the bulk density. When the molding machine M is utilized, the pulverized material Qc or the virgin material Qp is fed into the hopper 2 of the molding machine M and is fed at least to a position of the hopper 2 above the shutter 3, then the shutter 3 is closed and thereafter the screw 4 is rotated to be able to measure the weight of the resin Qpr, Qcr in the drooling state discharged from the nozzle 5. However, the pulverized material Qc or the virgin material Qp the volume of which is measured with a container such as a measure may be fed into the hopper 2. Although as the predetermined molding condition, the plasticization time Tm and the amount of heat generation Hw are described as examples, another molding condition can likewise be applied.

### Industrial Applicability

A method for molding a resin material mixed with a pulverized material according to the present embodiment can be utilized for various types of injection molding machines that plasticize and injection-mold a resin material mixed with a pulverized material in which a virgin material (pellets) and a pulverized material are mixed in a predetermined ratio, and can also be utilized as various types of injection molding methods.

### Reference Signs List

2: hopper, 3: shutter, 4: screw, 5: nozzle, Q: resin material mixed with pulverized material, Qp: virgin material, Qc: pulverized material, Qpr: resin in drooling state, Qcr: resin in drooling state, Dc: pulverized material bulk density data, Dp: virgin material bulk density data, Kc: conversion coefficient, M: molding machine (injection molding machine), Tm: plasticization time, Hw: amount of heat generation

### Citation List

Patent Literature 1: Japanese Unexamined Patent Application Publication No. 2007-125818
Patent Literature 2: Japanese Unexamined Patent Application Publication No. H7(1995)-304038

## Claims

1. A method for molding a resin material mixed with a pulverized material, the method comprising:
plasticizing and injection-molding a resin material mixed with a pulverized material in which a virgin material and a pulverized material are mixed in a predetermined ratio,
wherein bulk densities of the virgin material and the pulverized material are previously measured;
based on pulverized material bulk density data related to the bulk density of the pulverized material and virgin material bulk density data related to the bulk density of the virgin material obtained by the measurement, determining and registering a conversion coefficient for a predetermined molding condition when the virgin material and the pulverized material are mixed in the predetermined ratio;
when the pulverized material is used, measuring at least a bulk density of the pulverized material which is used; and
based on the pulverized material bulk density data, the virgin material bulk density data obtained by the measurement, and the conversion coefficient, processing for modifying the molding condition.

2. The method for molding a resin material mixed with a pulverized material according to claim 1,
wherein as the bulk density, a loose bulk density is used.

3. The method for molding a resin material mixed with a pulverized material according to claim 1 or 2,
wherein the measurement of the bulk density is performed by utilizing a function of a molding machine.

4. The method for molding a resin material mixed with a pulverized material according to claim 3,
wherein the measurement of the bulk density is performed by
feeding the pulverized material or the virgin material into a hopper of the molding machine,
closing a shutter when the pulverized material or the virgin material is fed at least to a position of the hopper above the shutter and
thereafter rotating a screw to measure a weight of a resin in a drooling state which is discharged from a nozzle.

5. The method for molding a resin material mixed with a pulverized material according to claim 4,
wherein the total weight of the resin in the drooling state is used as the bulk density data.

6. The method for molding a resin material mixed with a pulverized material according to any preceding claim,
wherein the predetermined molding condition includes at least a plasticization time.

7. The method for molding a resin material mixed with a pulverized material according to any preceding claim,
wherein the predetermined molding condition includes at least an amount of heat generation.

8. The method for molding a resin material mixed with a pulverized material according to any preceding claim,
wherein the predetermined molding condition includes at least both a plasticization time and an amount of heat generation.

9. The method for molding a resin material mixed with a pulverized material according to any preceding claim,
wherein the conversion coefficient is corrected by the area of the pulverized material.

10. The method for molding a resin material mixed with a pulverized material according to any preceding claim,
wherein the conversion coefficient is corrected by the dimension of the pulverized material.

11. The method for molding a resin material mixed with a pulverized material according to any preceding claim,
wherein the conversion coefficient is corrected by the shape of a screw.

## Patentansprüche

1. Verfahren zum Formen eines mit einem pulverförmigen Material gemischten Harzmaterials, wobei das Verfahren umfasst:
Plastifizieren und Spritzgießen eines Harzmaterials gemischt mit einem pulverförmigen Material, bei dem ein neues Material und ein pulverförmiges Material in einem vorbestimmten Verhältnis gemischt werden,
wobei zuvor Schüttdichten des neuen Materials und des pulverförmigen Materials gemessen werden;
auf der Grundlage von Schüttdichte-Daten zu pulverförmigem Material, die sich auf die Schüttdichte des pulverförmigen Materials beziehen, und Schüttdichte-Daten zum neuen Material, die sich auf die Schüttdichte des neuen Materials beziehen, die durch die Messung erhalten werden, Bestimmen und Registrieren eines Umrechnungskoeffizienten für einen vorbestimmten Formzustand, wenn das neue Material und das pulverförmige Material im vorbestimmten Verhältnis gemischt werden;
Messen zumindest einer Schüttdichte des verwendeten pulverförmigen Materials bei Verwendung des pulverförmigen Materials, und
auf der Grundlage der Schüttdichte-Daten zum pulverförmigen Material, der Schüttdichte-Daten zum neuen Material, die durch die Messung erhalten werden, und des Umrechnungskoeffizienten, Verarbeitung zur Modifizierung der Formbedingung.

2. Verfahren zum Formen eines mit einem pulverförmigen Material gemischten Harzmaterials nach Anspruch 1,
wobei als Schüttdichte eine lose Schüttdichte verwendet wird.

3. Verfahren zum Formen eines mit einem pulverförmigen Material gemischten Harzmaterials nach Anspruch 1 oder 2,
wobei die Messung der Schüttdichte unter Verwendung einer Funktion einer Formmaschine durchgeführt wird.

4. Verfahren zum Formen eines mit einem pulverförmigen Material gemischten Harzmaterials nach Anspruch 3,
wobei die Messung der Schüttdichte durchgeführt wird durch Zuführen des pulverförmigen Materials oder des neuen Materials in einen Trichter der Formmaschine,
Schließen einer Blende, wenn das pulverförmige Material oder das neue Material zumindest einer Position des Trichters über der Blende zugeführt wird, und
anschließend Drehen einer Schraube, um ein Gewicht eines Harzes in einem tropfenden Zustand zu messen, das aus einer Düse ausgetragen wird.

5. Verfahren zum Formen eines mit einem pulverförmigen Material gemischten Harzmaterials nach Anspruch 4,
wobei das Gesamtgewicht des Harzes im tropfenden Zustand als Schüttdichte-Daten verwendet wird.

6. Verfahren zum Formen eines mit einem pulverförmigen Material gemischten Harzmaterials nach einem der vorhergehenden Ansprüche,
wobei die vorbestimmte Formbedingung mindestens eine Plastifizierzeit beinhaltet.

7. Verfahren zum Formen eines mit einem pulverförmigen Material gemischten Harzmaterials nach einem der vorhergehenden Ansprüche,
wobei die vorbestimmte Formbedingung mindestens eine Menge an Wärmeerzeugung beinhaltet.

8. Verfahren zum Formen eines mit einem pulverförmigen Material gemischten Harzmaterials nach einem der vorhergehenden Ansprüche,
wobei die vorbestimmte Formbedingung mindestens sowohl eine Plastifizierzeit als auch eine Menge an Wärmeerzeugung beinhaltet.

9. Verfahren zum Formen eines mit einem pulverförmigen Material gemischten Harzmaterials nach einem der vorhergehenden Ansprüche,
wobei der Umrechnungskoeffizient um die Fläche des pulverförmigen Materials korrigiert wird.

10. Verfahren zum Formen eines mit einem pulverförmigen Material gemischten Harzmaterials nach einem der vorhergehenden Ansprüche,
wobei der Umrechnungskoeffizient um die Dimension des pulverförmigen Materials korrigiert wird.

11. Verfahren zum Formen eines mit einem pulverförmigen Material gemischten Harzmaterials nach einem der vorhergehenden Ansprüche,
wobei der Umrechnungskoeffizient durch die Form einer Schraube korrigiert wird.

## Revendications

1. Procédé de moulage d'un matériau en résine mélangé à un matériau pulvérisé, le procédé comprenant :
la plastification et le moulage par injection d'un matériau en résine mélangé à un matériau pulvérisé dans lesquels un matériau vierge et un matériau pulvérisé sont mélangés dans un rapport prédéterminé,
les densités apparentes du matériau vierge et du matériau pulvérisé étant préalablement mesurées ;
sur la base de données de densité apparente de matériau pulvérisé liées à la densité apparente du matériau pulvérisé et de données de densité apparente de matériau vierge liées à la densité apparente du matériau vierge obtenues par la mesure, la détermination et l'enregistrement d'un coefficient de conversion pour une condition de moulage prédéterminée lorsque le matériau vierge et le matériau pulvérisé sont mélangés dans le rapport prédéterminé ;
lorsque le matériau pulvérisé est utilisé, la mesure d'au moins une densité apparente du matériau pulvérisé qui est utilisé ; et
sur la base des données de densité apparente du matériau pulvérisé, des données de densité apparente du matériau vierge obtenues par la mesure et du coefficient de conversion, le traitement pour la modification des conditions de moulage.

2. Procédé de moulage d'un matériau en résine mélangé à un matériau pulvérisé selon la revendication 1,
dans lequel une densité apparente lâche est utilisée comme densité apparente.

3. Procédé de moulage d'un matériau en résine mélangé à un matériau pulvérisé selon la revendication 1 ou 2,
dans lequel la mesure de la densité apparente est effectuée en utilisant une fonction d'une machine de moulage.

4. Procédé de moulage d'un matériau en résine mélangé à un matériau pulvérisé selon la revendication 3,
dans lequel la mesure de la densité apparente est effectuée par l'introduction du matériau pulvérisé ou du matériau vierge dans une trémie de la machine de moulage,
la fermeture d'un obturateur lorsque le matériau pulvérisé ou le matériau vierge est introduit au moins jusqu'à une position de la trémie au-dessus de l'obturateur et
ensuite la rotation d'une vis pour mesurer un poids d'une résine dans un état d'excitation qui est déchargée à partir d'une buse.

5. Procédé de moulage d'un matériau en résine mélangé à un matériau pulvérisé selon la revendication 4,
dans lequel le poids total de la résine à l'état d'excitation est utilisé en tant que donnée de densité apparente.

6. Procédé de moulage d'un matériau en résine mélangé à un matériau pulvérisé selon l'une quelconque des revendications précédentes,
dans lequel la condition de moulage prédéterminée comprend au moins un temps de plastification.

7. Procédé de moulage d'un matériau en résine mélangé à un matériau pulvérisé selon l'une quelconque des revendications précédentes,
dans lequel la condition de moulage prédéterminée comprend au moins une quantité de génération de chaleur.

8. Procédé de moulage d'un matériau en résine mélangé à un matériau pulvérisé selon l'une quelconque des revendications précédentes,
dans lequel la condition de moulage prédéterminée comprend au moins à la fois un temps de plastification et une quantité de génération de chaleur.

9. Procédé de moulage d'un matériau en résine mélangé à un matériau pulvérisé selon l'une quelconque des revendications précédentes,
dans lequel le coefficient de conversion est corrigé par la surface du matériau pulvérisé.

10. Procédé de moulage d'un matériau en résine mélangé à un matériau pulvérisé selon l'une quelconque des revendications précédentes,
dans lequel le coefficient de conversion est corrigé par la dimension du matériau pulvérisé.

11. Procédé de moulage d'un matériau en résine mélangé à un matériau pulvérisé selon l'une quelconque des revendications précédentes,
dans lequel le coefficient de conversion est corrigé par la forme d'une vis.
